# EUROPEAN PATENT SPECIFICATION

(11) **EP 1 358 538 B1**
(45) Date of publication and mention of the grant of the patent: **11.08.2010**
(21) Application number: 01908942.4
(22) Date of filing: 07.02.2001
(51) Int. Cl.: G06F 1/32, G06F 1/08, G06F 1/10, G06F 9/38

(54) **METHOD AND APPARATUS FOR APPLYING CLOCK SIGNALS TO THE PROCESSOR OF MOBILE SUBSCRIBER STATION TO MANAGE POWER CONSUMPTION**
VERFAHREN UND VORRICHTUNG ZUR VERSORGUNG EINES PROZESSORS EINES MOBILTEILNEHMERGERÄTES MIT TAKTSIGNALEN UM DEN LEISTUNGSVERBRAUCH ZU VERWALTEN
PROCEDE ET APPAREIL D'APPLICATION DE SIGNAUX D'HORLOGE AU PROCESSEUR D'UN POSTE D'ABONNE MOBILE AFIN DE GERER LA CONSOMMATION D'ENERGIE

(43) Date of publication of application: 05.11.2003
(73) Proprietor: QUALCOMM INCORPORATED, San Diego, CA 92121-1714 (US)
(72) Inventor: KHAN, Safi, San Diego, CA 92121-1714 (US); YU, Nicholas, K., San Diego, CA 92131 (US); HASQUINE, David, W., San Diego, CA 92122 (US); FUCHS, Robert, San Diego, CA 92121-1714 (US); STAFFORD, Dave, San Diego, CA 92121-1714 (US); DHAWAN, Rajat, San Diego, CA 92121-1714 (US)
(74) Representative: Dunlop, Hugh Christopher
(86) International application number: PCT/US2001/003986
(87) International publication number: WO 2002/063452

(56) References cited:
- US-A- 4 855 616
- US-A- 4 870 299
- US-A- 5 099 140
- US-A- 5 448 597
- US-A- 5 623 223
- US-A- 5 825 674
- US-A- 5 842 029
- PATENT ABSTRACTS OF JAPAN vol. 1995, no. 01, 28 February 1995 (1995-02-28) & JP 06 295243 A (MITSUBISHI ELECTRIC CORP), 21 October 1994 (1994-10-21)

## Description

### BACKGROUND OF THE INVENTION

### I. Field of the Invention

The invention generally relates to mobile subscriber stations, such as mobile telephones, and in particular to methods and apparatus for applying clock signals to a processor of the mobile station to reduce power consumption while avoiding timing problems.

### II. Description of the Related Art

Mobile subscriber stations, such as cellular telephones, are becoming increasingly sophisticated and often provide many additional functions along with conventional cellular voice telephonic capabilities. Some state of the art mobile stations can send and receive paging messages, provide Internet access, or provide personal digital assistant ("PDA") functions such as scheduling and calendaring functions. To accommodate the additional functions, mobile stations are provided with increasingly powerful and sophisticated processors as well as with larger and larger amounts of data storage memory. Hence, power consumed by a mobile station can be substantial, necessitating frequent recharging. Accordingly, it is desirable to reduce power consumption within mobile stations.

One technique for reducing power consumption within a mobile station is to selectively employ various clock signals having different frequencies for use with different mobile station components depending upon the current needs of the components. The clock signals are provided by different clock sources and hence are typically asynchronous with respect to one another. The different clock sources consume differing amounts of power and provide clock signals of differing degrees of precision. For each internal component of the mobile station and for each mode of operation, clock control components of the mobile station select the best clock signal for applying to the component so as to consume the least power while providing sufficient clocking speed and precision. For example, a slow clock from a lower power, low frequency clock source may be selected for use while the mobile station is deactivated to run components needed to track the date and the time of day. Higher frequency and more precise clock signals are selected for use with the processor and other key components of the mobile station while the mobile station is activated. During periods of time when optimal performance is required, such as during a telephonic conversation, still higher frequency clock signals are used. In all cases, the individual clock sources of the various clock signals are preferably completely turned off whenever the corresponding clock signals output by the sources are not required.

To gain still further power savings, the frequencies of the individual asynchronous clock signals are selectively sub-divided to provide various slower versions of the clock signals consuming less power. For example, a single clock signal from a single source may be divided to provide a set of different clock signals of different frequencies, synchronous with one another. To this end, the single clock signal may be divided by factors of two, four, eight, sixteen, etc. or by other divide factors which are not powers of two. In this manner, the clock control circuitry is provided with an even larger set of available clock signals from which to select the best clock signal for each component and for each mode of operation to reduce power consumption.

Another technique for reducing power consumption is to completely deactivate the processor of the mobile station during periods of time while the processor, need not be operational, even though the mobile station is otherwise activated (see US Patent No. 5,825,674 and COMPAQ et al., Advanced Configuration and Power Interface Specification Revision 2.0, July 2000). To this end, conventional mobile stations have typically employed complex instruction set computing ("CISC") processors having internal power management circuitry providing power up and power down capability. To save power, the processor initiates a power shutdown procedure wherein the processor performs various functions directed to storing information representative of the final state of the processor. Once the various functions have been completed, the processor is shut down by disconnecting clock signals from the processor. The power supply to the processor is then also deactivated. When the operations of the processor are again required, a power up procedure is performed wherein the processor performs various functions directed to re-setting the processor to its pre-shut down state. Typically, a warm up period is required before the processor can become fully operational again.

Unfortunately, it can often take a fair amount of clock cycles for the processor to complete the power shutdown procedures before power savings can be realized. It can also often take a fair amount of time for the processor to perform the power up procedures before becoming fully operational, thereby requiring the processor to be reactivated well in advance of when its serves arc actually required. Hence, optimal power savings are not achieved. Moreover, within mobile stations implemented according to code division multiple access ("CDMA") protocols, the processor may need to be operational during periodic paging slots, typically occurring every 26.7 milliseconds. If so, the processor can only be deactivated during the period of time between the paging slots. To deactivate between each pair of consecutive paging slots, the processor must first perform the power down procedure after each paging slot, then perform the power up procedure prior to each subsequent paging slot. Hence, the available amount of time between paging slots that the processor is actually shut down may be minimal, resulting in inadequate power savings.

One solution that has been proposed is to operate the mobile station using a reduced instruction set computing ("RISC") processor that is powered up or powered down merely by selectively connecting or disconnecting a clock signal to the processor. In other words, a processor is used which does not require potentially lengthy power up and power down procedures. One example of such a RISC processor is the ARM7TDMI^{™} processor provided by ARM, Inc.^{™} With such a processor, enhanced power saving can be achieved because the processor can be powered up or powered down much more quickly to thereby extend the amount of time during which the processor is deactivated. This is particularly advantageous for CDMA mobile stations wherein, during use, the processor can only be deactivated between paging slots.

Although such RISC processors are well suited for achieving enhanced power savings, problems arise when implementing the processor within some mobile stations, particularly mobile stations employing a set of different clock signals, generally asynchronous with one another, and capable of selective sub-division. For example, problems may arise if a clock signal is disconnected from the processor during an active phase of the clock signal. In this situation, the processor receives only a fragment of the active phase of the clock signal, which may be of insufficient length to permit proper functioning of individual internal components of the processor, particularly sample and hold circuits. As a result, the processor may perform erroneous or unpredictable functions, perhaps resulting in a malfunction causing dropped station calls, lost paging messages, or the like. It is also important to preserve the state of processor during power down. Otherwise, clock glitches could make the processor go into an erroneous state.

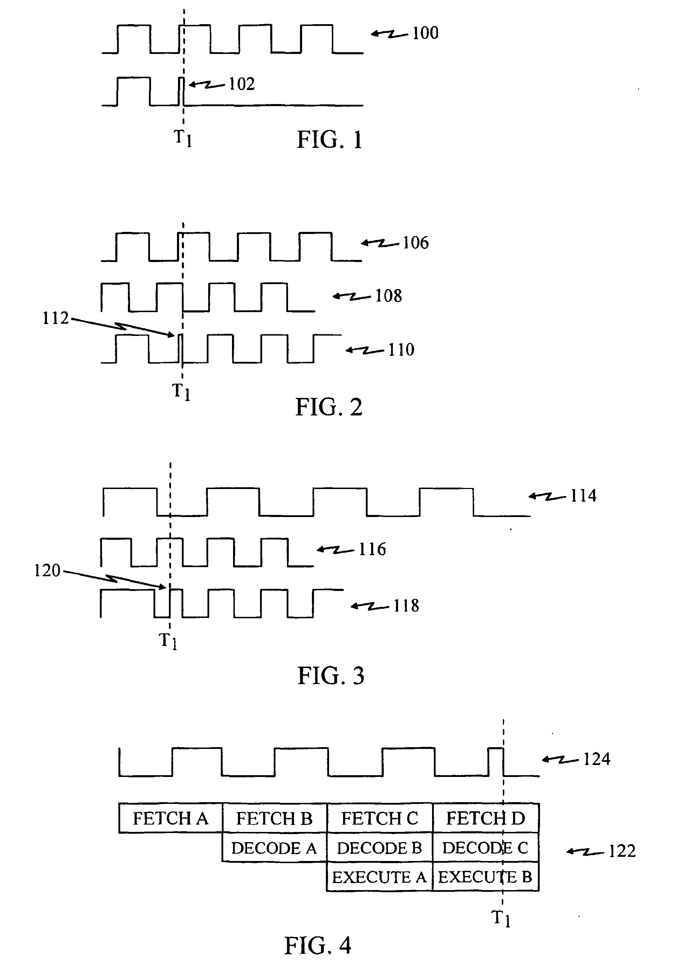

**Fig. 1** illustrates a clock signal **100** being disconnected at a time T₁ during an active phase. As can be seen, an active phase fragment **102** is generated. Being much shorter in duration than all other active phase signal components, the fragment may result in the aforementioned processor malfunctions. Indeed, as a result of electrical signal processing effects, internal components of the processor may actually see a waveform wherein the clock fragment appears as a sequence of oscillating, decaying signal peaks. Depending upon the circuitry of the processor, each individual peak may be interpreted as a new active phase signal likely resulting in a processor malfunction. A short active phase clock signal fragment is also referred to herein as a clocking "glitch".

Likewise, the clock signal input to the processor cannot merely be switched from one asynchronous signal to a second asynchronous signal without the possibility of malfunctions because it could disturb the preserved state of the processor before and after power down, nor can the clock signal merely be divided to yield a slower clock signal without the potential for malfunction. A case where a clock signal input to a processor is switched between asynchronous clock signals is illustrated in **Fig. 2****.** As can be seen, when a clock signal **106** is switched to an asynchronous clock signal 108 at a time T₁, the clock waveform **110** that the processor actually inputs may include an inactive phase fragment **112** also possible causing a clocking glitch. The case where a clock signal is divided to yield a lower frequency synchronous clock signal is illustrated in **Fig. 3****.** As can be seen, subdividing a clock signal **114** at a time T₁ to yield a second clock signal **116** having twice the frequency may result in the processor actually inputting waveform **118** having a clocking glitch **120.**

Furthermore, some state of the art RISC processors, including the aforementioned ARM7TDMI processor, are pipelined processors capable of processing multiple instructions simultaneously. In the case of the ARM7TDMI processor, the processor is capable of fetching a first instruction while decoding a second instruction and while executing a third instruction. Problems arise if the clock signal applied to the processor is deactivated, switched, or divided while the processor is performing pipelined operations because the subsequent state of the processor cannot easily be guaranteed. In other words, if the clock signal is arbitrarily deactivated, switched or divided during execution of an instruction, it may be difficult or impossible for peripheral components to determine whether the instruction was fully executed before shutdown. As a result, the peripheral components connected to the processor may subsequently be out of synch with the processor resulting in unpredictable or erroneous behavior, again possible resulting in malfunctions such as dropped calls, lost paging messages, or the like. **Fig. 4** illustrates a three-stage pipeline **122** and a corresponding clocking signal **124.** An instruction A is fetched in a first clock cycle, decoded in a second clock cycle, and executed in a third clock cycle. An instruction B is fetched in the second clock cycle, decoded in the third clock cycle, then executed in a fourth clock cycle, and so on. If the clock signal is deactivated at time T₁, the fetch, decode and execution instructions being performer at that time may or may not have already been completed. As a result, when the processor is subsequently reactivated by reapplying the clock signal, peripheral components connected to the processor, such as a system bus or the like, will not easily be able to determine the reactivation state of the processor. Thus, either lengthy procedures will need to be performed to determine the state of the processor and to bring all peripheral components into synchronization therewith or a considerable risk of a malfunction may arise. For mobile stations employing PDA capabilities, the resulting malfunctions may cause erroneous storage of incorrect information within memory units employed in connection with calendaring or scheduling functions or the like. The user may be presented with incorrect information, possible resulting in missed meetings and the like.

Document JP 11-327899 discloses a pipelined processor arranged to disconnect the clock signal before the next instruction is executed. However, this processor is not suitable for disconnecting the clock signal while executing another instruction.

Accordingly, it would be highly desirable to provide a method and apparatus for controlling the application of clock signals to a processor within a mobile station wherein the processor is of the type which does not include internal power management and clock management circuitry and which instead permits deactivation merely by disconnecting an input clock signal. In particular, it is desirable to provide methods and apparatus for powering down and subsequently powering up such a processor while avoiding clocking glitches and while ensuring reliable synchronization of the processor with peripheral components.

### SUMMARY OF THE INVENTION

According to the invention there is provided the method of claim 1.

According to the invention there is provided the system of claim 10.

In accordance with a first embodiment of the invention, a method is provided for deactivating a processor of a mobile station by disconnecting a clock signal from the processor using peripheral circuitry. The processor executes an instruction to place a predetermined device external to the processor into a predetermined state. The instruction is only applied to the external device as part of a power down operation. The peripheral circuitry detects the external device being placed in the predetermined state and, in response thereto, disconnects the clock signal from the processor subsequent to completion of operations performed by the processor during a current pipeline stage of the processor and prior to initiation of operations of a subsequent pipeline storage of the processor.

In an exemplary embodiment, the processor is a pipelined RISC processor lacking any internal clock management circuitry. The instruction executed by the processor to initiate the power down operation is a store instruction to a unique register within the peripheral circuitry. The store instruction operates to first store a binary one, then store a binary zero in the storage register. The peripheral circuitry monitors the storage register to detect the storage of a one followed by a zero and then proceeds to disconnect the clock signal from the processor. The clock signal is disconnected while the clock signal is in a low or inactive state and after completion of instruction performed in a current pipeline stage but before initiation of instructions of a subsequent pipeline stage. By deactivating the processor only in response to detection of the storage of a one, followed by a zero, the risk of an inadvertent processor deactivation is substantially reduced. By disconnecting the clock from a processor during an inactive phase of the clock, it is assured that the processor does not receive a fragment of an active phase of the clock signal possibly resulting in a clock glitch causing potentially unpredictable behavior within the processor. By disconnecting the clock only after completion of instruction of a current pipeline stage and before initiation of instructions of a subsequent pipeline stage, the peripheral circuitry and all other components external to the processor can be assured of the final state of the system at power down. In contrast, if the clock signal were deactivated during execution of instructions of a pipeline phase of the processor, external components cannot easily determine whether the operations of that pipeline stage were completed and hence cannot easily determine the state of the processor at power down. If necessary, a wait signal is asserted to the processor during the current pipeline phase to stretch the pipeline phase to provide time to complete the operation of the pipeline stage. The wait signal is asserted until the clock signal has reached an inactive phase and the clock signal is disconnected during the inactive phase.

Also described herein is a method for switching between synchronous clock signals applied to a pipe-lined processor using peripheral circuitry also receiving the clock signals. Connection of a first clock signal to the processor is suspended while the first clock signal is in an inactive phase. Then, a second clock signal, synchronous with respect to the first, is selected The peripheral circuitry then waits until the second clock signal is also in an inactive phase then applies the second clock signals to the processor.

In one example, the processor is also a pipelined RISC processors lacking any internal clock management circuitry. The peripheral circuitry includes components for selectively dividing the clock signal by integer factors such as two, four, eight, sixteen, thirty-two or sixty-four. The processor and peripheral circuitry are employed within a mobile station with a clock signal being divided so as to provide a clock signal having an optimal frequency to provide sufficient processing speed while also reducing power consumption. By dividing the clock signal only while the signal is in an inactive phase and by applying the divided clock signal to the processor only while the divided clock signal is in an inactive phase, clocking glitches are prevented and unpredictable processor behavior is avoided.

Also described herein is a method for switching a clock signal applied to a pipelined processor of a mobile station from a first clock signal to a second clock signal which are asynchronous with respect to one another. The method is performed by peripheral circuitry connected to the processor. In accordance with the method, while the processor is receiving the first clock signal, the processor is controlled to initiate a power down operation by executing an instruction to place a predetermined device external to the processor into a predetermined state with the instruction only being applied to the external device as part of the power down operation. Next, the peripheral circuitry detects the external device being placed in the predetermined state and, in response thereto, waits until the clock signal has transitioned to an inactive phase subsequent to completion of instructions of a current pipeline stage. Then the peripheral circuitry disconnects the clock signal from the processor prior to initation of instructions of a subsequent pipeline stage. Thereafter, the peripheral circuitry is controlled to wait until the second clock signal is in an inactive phase, then the peripheral circuitry applies a second clock signal to the processor.

By suspending the first clock signal while it is in the inactive phase and by applying the second clock signal also while in the inactive phase, clock glitches are avoided. By switching the clock signals only between pipeline stages of the processor, unpredictable behavior of the processor is avoided by insuring that the operations of a current pipeline stage are fully completed before the clock signals are switched and before a subsequent pipeline stage is executed. If necessary, a wait signal is asserted to the processor to extend a current pipeline phase by an amount sufficient to ensure that all operations of the pipeline stage are complete prior to disconnection of the first clock signal from the processor.

Thus, the invention provides various techniques for managing clock signals applied to a processor of a mobile station, particularly a processor which lacks internal clock management circuitry, so as to permit optimal power savings while substantially preventing unpredictable processor behavior that might otherwise occur as a result of clock glitches and the like. Apparatus embodiments of the invention are also provided. Other objects, features and advantages of the invention will be apparent from the detailed description which follows in combination with the drawings provided herewith.

### BRIEF DESCRIPTION OF THE DRAWINGS

**Fig. 1** is a timing diagram illustrating a clocking glitch caused by deactivation of a clock signal during an active phase of the clock signal.
**Fig. 2** is a timing diagram illustrating a clocking glitch arising during a switch from one clock signal to a second, asynchronous clock signal.
**Fig. 3** is a timing diagram illustrating a clocking glitch arising when subdividing a clock signal to a second, synchronous clock signal.
**Fig. 4** is a timing diagram illustrating stages of a pipelined processor and further illustrating disconnection of a clock signal from the processor during one of the pipeline stages.
**Fig. 5** is a block diagram illustrating pertinent components of a mobile station having a pipelined RISC processor and a clock/power controller configured in accordance with an exemplary embodiment of the invention.
**Fig. 6** is a block diagram illustrating pertinent components of the clock/power controller of **Fig. 5**.
**Fig. 7** is a timing diagram illustrating a method by which pipelined stages of the RISC processor of **Fig. 5** are stretched so as to permit power shutdown of the processor without loss of synchronization with peripheral components.
**Fig. 8** is a timing diagram illustrating a method by which the clock/power controller of **Fig. 5** switches between synchronous clock signals while substantially ensuring glitch free operation.
**Fig. 9** is a timing diagram illustrating a method by which the clock/power controller of **Fig. 5** switches between asynchronous clock signals while ensuring glitch-free operation.
**Figs. 10A-C** illustrate a circuit schematic illustrating a specific implementation of the clock/power controller of **Fig. 6****.**
**Fig. 11** is a timing diagram illustrating specific signals used in connection with the circuit of **Figs. 10A-C** for use in switching between synchronous clock signals.
**Fig. 12** is a timing diagram illustrating specific signals used in connection with the circuit of **Figs. 10A-C** for power down and subsequent power up.
**Fig. 13** is a timing diagram illustrating specific signals used in connection with the circuit of **Figs. 10A-C** when coming out of a reset.

### DETAILED DESCRIPTION OF THE EXEMPLARY

### EMBODIMENTS

With reference to the remaining figures, preferred and exemplary embodiments of the invention will now be described. The embodiments related to a wireless mobile station, such as a cellular telephone, but principles of invention are applicable to other systems as well.

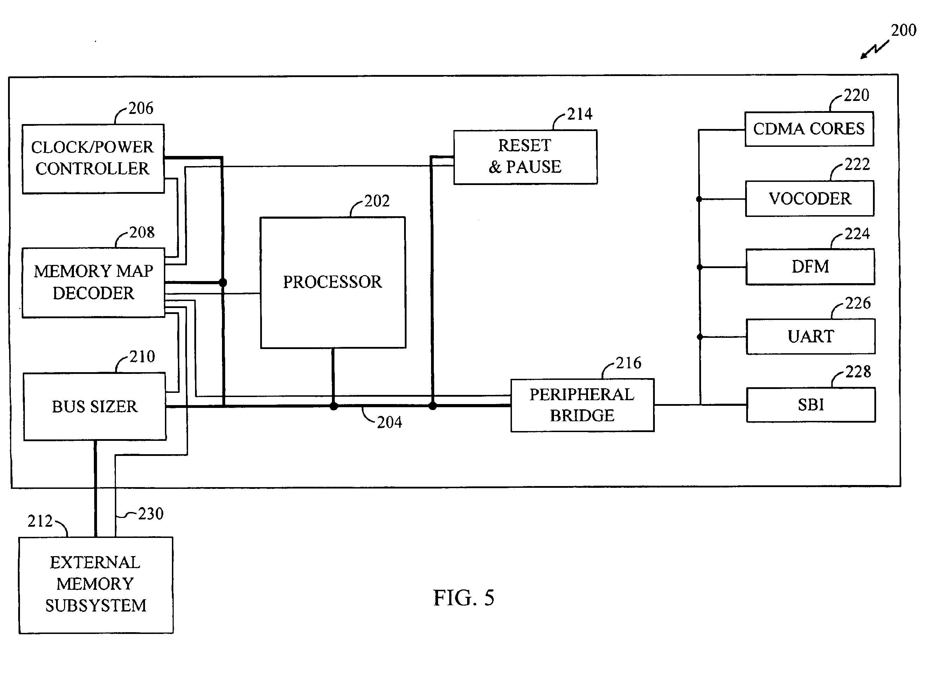

**Fig.** 5 illustrates pertinent components of a mobile station **200** of a CDMA wireless system. The mobile station includes an RISC microprocessor of the type wherein power up is achieved merely by applying clock signals to the processor and power down is achieved merely disconnecting clock signals from the microprocessor. In the preferred implementation, the RISC processor includes an ARM7TDMI^{™} core along with an AMBA^{™} bus master all available from ARM, Inc.^{™} Processor **202** is connected through a system bus **204** to a clock/power controller **206,** a memory map decoder **208**, a bus sizer **210,** an external memory subsystem **212,** a reset and pause unit **214** and a peripheral bridge **216**. The peripheral bridge provides access via a peripheral bus to peripheral components including CDMA circuitry **220,** a vocoder **222,** a digital frequency modulator (DFM) **224**, a universal synchronous receive and transmit unit (UART) **226** and a system bus interface (SBI) **228.** Additional component interconnections include a dedicated memory bus **230** and various other dedicated interconnection lines illustrated within **Fig. 5****.**

Briefly, clock/power controller **206** includes components for controlling the application of clock signals to processor **202** so as to permit powering down and subsequent powering up of the processor while maintaining synchronization between the processor and the peripheral components. Additionally, the clock/power controller includes components for switching between asynchronous clock signals, which are divided versions of a single clock signal, so as to achieve power savings while also ensuring glitch-free operation. Moreover, the clock/power controller includes components for switching between asynchronous clock signals so as to provide further power savings while also ensuring glitch-free operation.

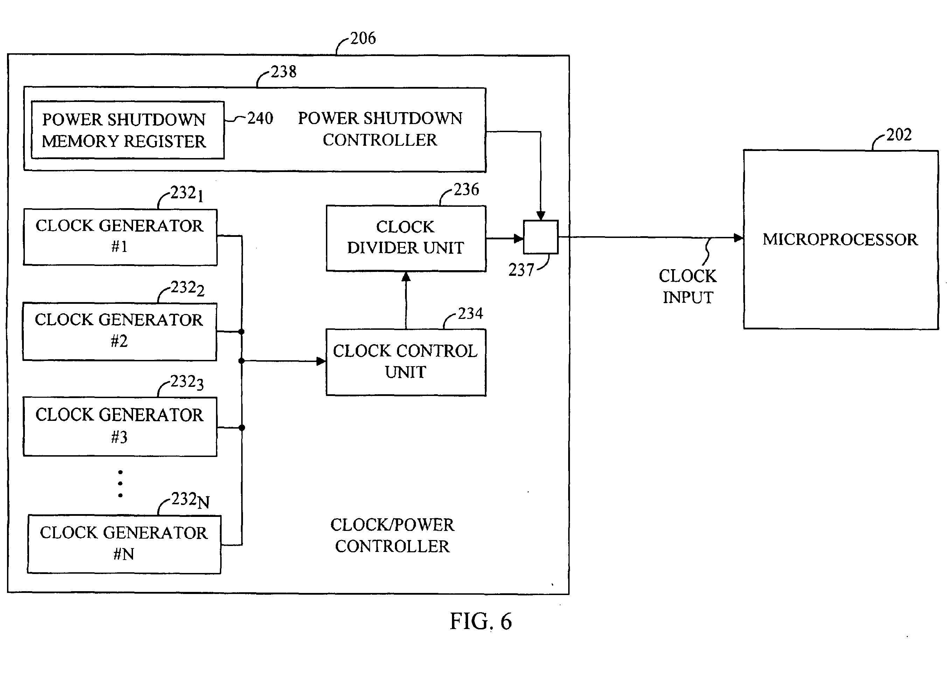

Pertinent components of clock/power controller **206** are illustrated in **Fig. 6** along with the RISC processor. Controller **206** includes a set of clock generators 232₁-**232_{N}** each providing a clock signal generally asynchronous with respect to the others. The various clock signals have different frequencies, different degrees of precision, and generally consume different amounts of power during operation. A clock control unit **234** selects one of the clock signals for applying to the RISC processor. The clock signal is selected so as to provide sufficient clock speed and precision to accommodate the current needs of the processor. The determination of the appropriate clock signal is made by software executing within the processor. Control signals are sent from the processor to the clock control unit (via control signal lines not specifically shown) for triggering a switch from one asynchronous clock signal to another. (The method by which the clock signals are switched while ensuring glitch-free operation is described in detail below.) If the processor is not operating, the clock control unit operates in accordance with control signals received from the processor prior to shut down or in accordance with default values. The selected clock signal is routed from clock control unit **234** through a clock divider **236** which divides the selected clock signal, also under control of processor **202,** to provide a slower clock signal, synchronous with respect to the selected clock signal. Any of the clock signals generated by the clock generators can be divided by factors of 2, 4, 8, 16, 32 and 64. Other divide factors, which are not necessarily powers of two, can be alternatively employed. In this manner, a large set of available clock signals of differing clock rates, precision, and power consumption are available for use in applying to the processor and to various other components of the mobile station. As with the clock control unit, the clock divider unit responds to control signals provided by the processor (via control signal lines not specifically shown) or uses default values. As will be described in greater detail below, clock divider unit **236** operates to switch from a clock signal to a divided version of the clock signal in a manner to ensure glitch-free transitions of signals applied to the processor.

The clock/power controller **206** also includes a power shutdown controller **238** which shuts down power to the RISC processor by gating the clock signal output from the clock divider unit using a switch **237.** The clock signal output from switch **237** is received via a clock input of microprocessor **202**. Again, as with the other components of the clock/power controller, the power shutdown controller operates so as to avoid clocking glitches. The power shutdown controller also operates so as to ensure that the final shut down state of the RISC processor is known so that peripheral components can be in proper synchronization with the processor upon subsequent power up. As one of its components, the power shutdown controller includes a power shutdown memory register **240** employed to detect when a power shutdown operation is to be initiated.

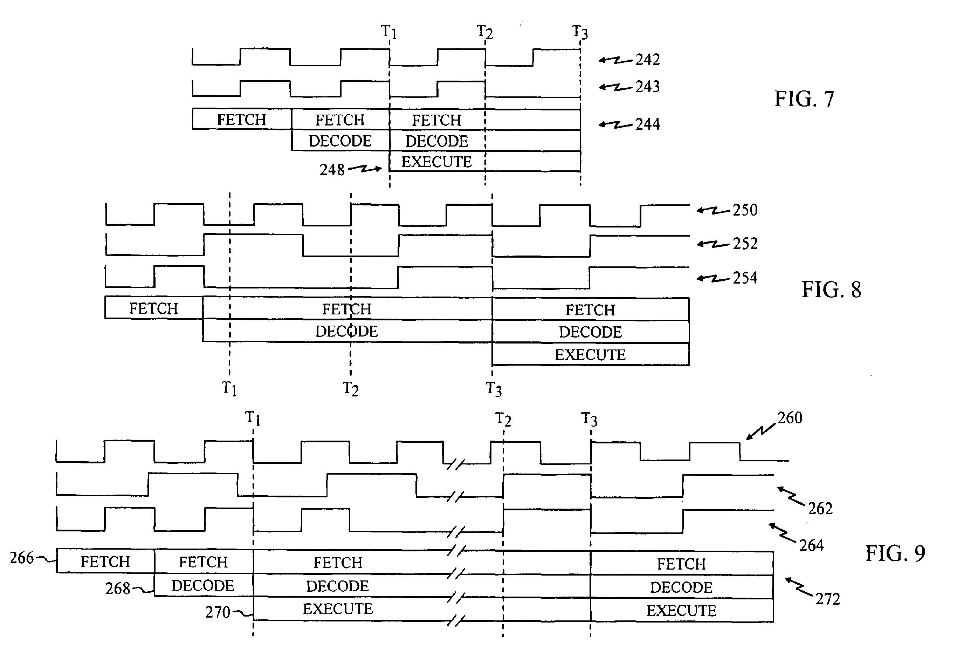

The method by which a power shutdown operation is performed will now be described in greater detail with further reference to **Fig. 6** and with additional reference to the timing diagram of **Fig. 7**. The power shutdown operation is initiated by the RISC processor, which performs a pair of predetermined load operations to memory register **240**. The register accommodates only a single bit and is initially set to binary zero. In the predetermined load operations, the processor first writes a binary one to the memory register, then writes a binary zero. Power shutdown controller **238** monitors the memory register and, if it detects a transition from binary one to zero, the controller begins operations to disconnect the clock signal from the processor.

The specific address defining the memory register is a unique address accessed only by the processor during the power shutdown operation and at no other time. Hence, a routine read or write to memory locations within the external memory subsystem (**Fig. 5**) does not affect the contents of memory register **240** and a transition from a zero to a one within the memory register thereby provides a reliable indication that a power shutdown operation has been initiated by the processor. Nevertheless, to ensure that software errors or other anomalies do not trigger an unintended power shutdown operation, the processor performs the second load operation which switches the memory register back to zero. As noted, the power shutdown controller responds only to the loading of a one followed by the loading of a zero in the memory register. Hence, it is extremely unlikely that software errors or other anomalous behavior by the processor or by other components of the mobile station will inadvertently trigger an unintended power shutdown operation.

Upon detecting the loading of a one followed by a zero within memory register **240**, power shutdown controller **238** performs a shutdown operation for disconnecting the clock signal output by clock divider unit **236** to microprocessor **202**. The disconnect of the clock signal is performed while the clock signal is within a low or inactive phase subsequent to expected completion of a current pipeline stage of the processor. By disconnecting the clock signal in a low phase, clock glitches are avoided. To ensure that all operations associated with the current pipeline stage are completed, power shutdown controller **238** applies a wait signal to the processor before the clock signal is disconnected to stretch the current pipeline stage an additional one clock cycle. In this manner, the current state of the processor is set to a known state. If the clock signal were merely deactivated at an arbitrary time during a pipeline stage, the corresponding instructions may or may not be completed. As a result, peripheral components expecting the processor to have completed the operations prior to reactivation of the clock signal, may thereafter by out of synchronization with the microprocessor. As can be appreciated, the precise time at which the clock signal is disconnected and the precise amount of stretching of the pipeline stage may depend upon the particular characteristics of the system and thus may vary from system to system in accordance with the general principles of the invention.

**Fig. 7** illustrates the method by which pipelined stages of RISC processor of **Fig. 5** are stretched so as to permit power shutdown of the processor without loss of synchronization with peripheral components. More specifically. **Figs 7** illustrates the current clock signal **242**, the clock signal that the processor receives **243**, and the pipeline **244** of the processor. The wait signal is applied at time T₁ to delay the next pipeline stage until time T₃ to ensure completion of all operations within pipeline stages **248**. In this manner, the wait signal stretches the current pipeline stage. Clock signal **242** is disconnected at time T₂, between times T₁ and T₃. The microprocessor then receives clock signal **243**, which is initially low following time T₂.

With reference to **Fig. 8**, the method by which clock control unit **134** of **Fig. 6** controls the dividing of a clock signal will now be described. Initially, a clock signal **250** having a clocking frequency of N cycles per second is applied to the processor. To switch to a second clock signal **252** having a frequency of N/2, the clock control unit first gates or disconnects clock signal **250** from the RISC processor between time T₁ and time T₃, then switches to clock signal **252** beginning at time T₂. The resulting input clock signal to the RISC processor is represented by clock signal **254**. As can be seen, the clock signal input to the processor remains low, or inactive, for at least the time between time T₁ and time T₃. By disconnecting the first clock signal during a low phase then applying the second, divided clock signal also during a low phase, glitch-free operation is assured. Alternatively, the second clock signal may be a faster clock signal than the first clock signal. In either case, if a transition between first and second clock signals occurred at an arbitrary time, clock glitches could occur possibly resulting in anomalous or unpredictable behavior of the processor.

Referring now to **Fig. 9****,** the method by which clock control unit 234 switches between asynchronous clock signals will now be described. Initially, a clock signal **260** is applied to the processor. To save power, or for other reasons, the clock control unit seeks to switch to a second, asynchronous clock signal **262.** Clock signal **264** is the clock signal actually input to the processor. The transition is achieved by first controlling the processor to initiate a power shutdown operation by loading a one, followed by a zero, into memory register **240** (**Fig. 6**). The power shutdown instruction is initially fetched at **266,** decoded at **268**, then executed at **270.** As with the power shutdown operation described above, a wait signal is then applied to the processor at time T₁ to stretch a pipeline stage **272** of the processor to T₃. Clock signal **260** is disconnected from the processor at time T₁. The microprocessor is shut down until time T₃. Between T₁ and T₃ an arbitrary number of clock cycles of clocks **260** and **262** may elapse. Note that, within pipeline stage **272**, the microprocessor completes the fetch, decode and execute instructions during the first full clock cycle of clock signal **264,** then remains inactive until T₃. A power up operation is then performed while applying clock signal **262** to the processor beginning at time T₃. The pipeline of the processor begins executing again using the new input clock signal.

In this manner, transition from clock signal **260** to asynchronous clock signal **262** is achieved while avoiding any clocking glitches and while ensuring reliable operation of the pipeline of the processor. If a transition were made arbitrarily between two asynchronous clock signals, clocking glitches could result causing anomalous or unpredictable behavior of the processor. Also, switching between asynchronous clock signals could result in circumstances wherein operations performed during a current pipeline stage may or may not be completed. Also in this case, a full shutdown procedure is performed, followed by a power up procedure, to ensure that the clocks arc properly warmed up for operation at a stable frequency. This is desirable particularly if the rate of the new clock signal is coming from an external component like a crystal or resonator. If so, then an immediate switch from a first clock signal to a much faster clock signal may result in anomalous behavior. More specifically, if an external clock is not warmed up (or otherwise reaches a stable state), irregular clock pulses, also know as runt pulses, with unstable amplitude and frequency behavior may occur. Runt pulses can have the same effect as clock glitches, and for example, can put the microprocessor into an unknown state. By performing a power up procedure wherein the clock is given the time to warm up, such problems are avoided. In **Fig. 9****,** the second clock signal is no faster than the first, and hence a warm up period is not specifically shown.

Thus, **Fig. 9** illustrates a situation wherein a power down operation is performed to permit switching from one clock signal to a second synchronous clock signal. It also may be desirable to extend the period of time between power shut down and the power up to save power, such as between paging slots within a CDMA system. Hence, an arbitrary amount of time may elapse between T₁ and T₃ to permit a sleep mode. During the sleep mode, all clock generators generating high frequency clock signals, such as clock signals **260** and **262,** are preferably placed in a low power mode to save additional power. The low power mode may be achieved, for example, by disconnecting a feedback signal path within the oscillator circuit associated with the clock generator. Putting a crystal oscillator into the low power mode in this manner within a typical CDMA mobile station may save about 4.5 mA of current. Upon power up, the crystal oscillator must be enabled and allowed to stabilize before the clock generated thereby is applied to the processor. A warm up timer is provided for timing a warm up period provided to permit oscillator stabilization. The actual sleep period is preferably timed by a low frequency, low power clock signal generator.

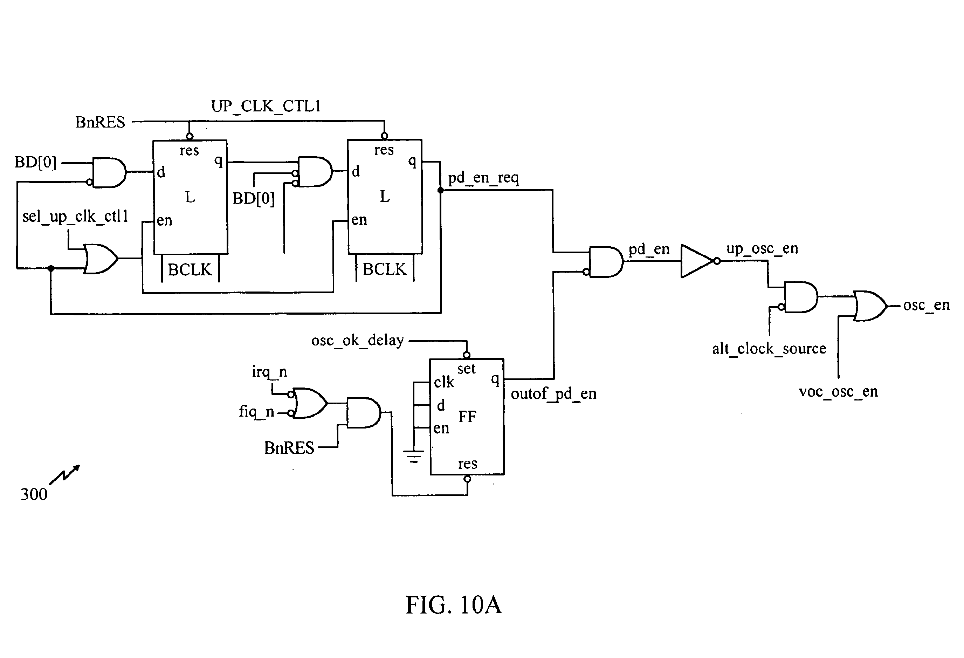

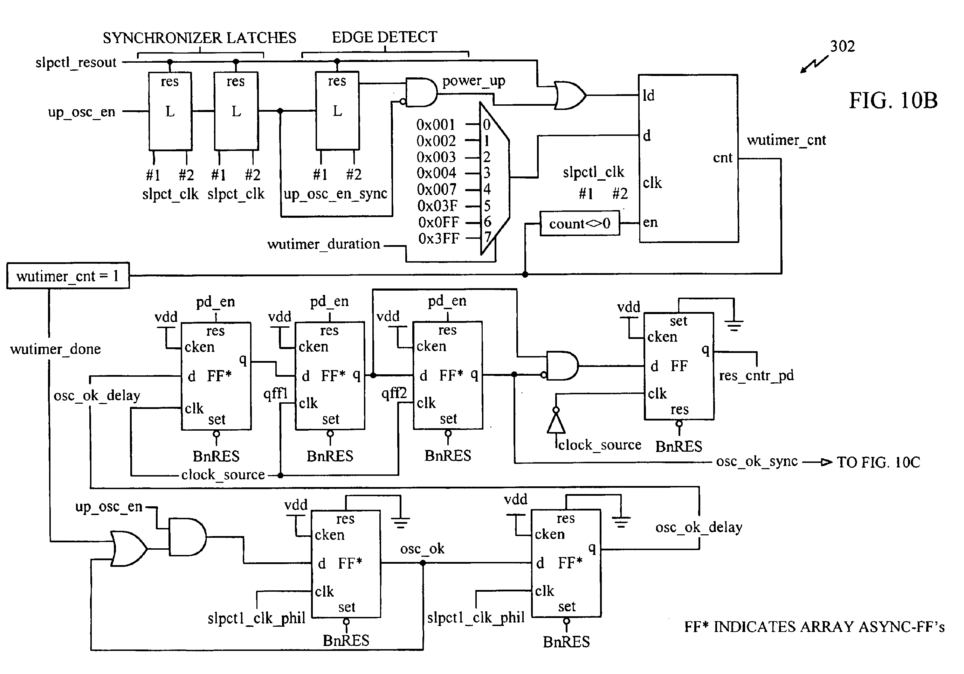

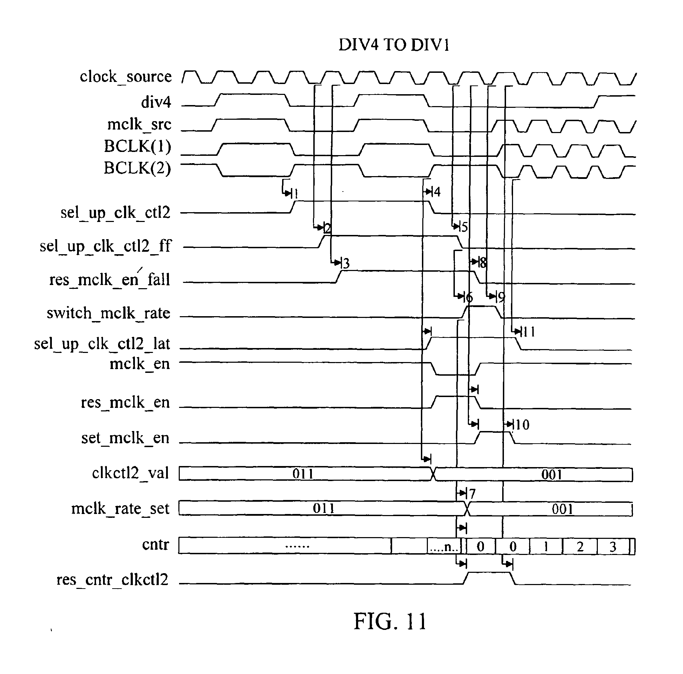

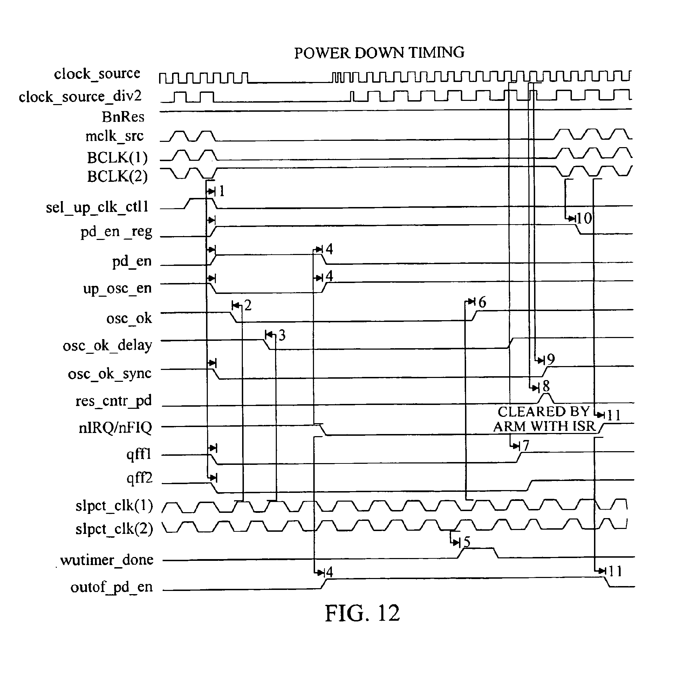

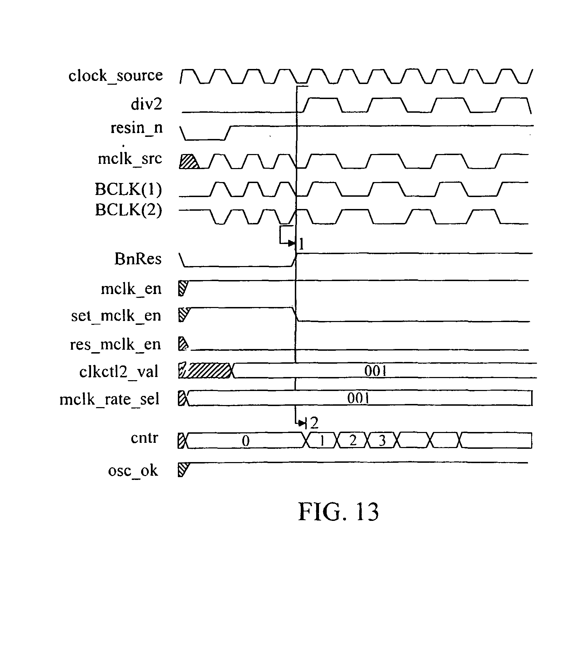

**Figs. 10A-C** illustrate a circuit schematic diagram illustrating pertinent circuit components of an exemplary power shutdown controller and clock control unit of **Fig. 6****.** Components identified by reference numeral **300** relate to control of the power shutdown operation. Components identified by reference numeral **302** relate to the power up operation and particularly include a warm-up timer for permitting the processor to warm up to a new clock signal rate. Components identified by reference numeral **304** relate to switching from one clock signal to another synchronous clock signal. **Fig. 11** is a timing diagram setting forth specific signals employed by the circuit of **Figs. 10A-C** for switching of the signal applied to the processor from a divided by four signal through a divided by one signal. **Fig. 12** is a timing diagram illustrating specific signals using connection with the circuit of **Figs. 10A-C** for first powering down the processor by disconnecting a clock signal from the processor and then subsequently powering up the processor. **Fig. 13** is a timing diagram illustrating specific signals used in connection with the circuit of **Figs. 10A-C** when coming out of a reset. As described above, the procedure for powering down, then subsequently powering up the processor may be performed to save power by deactivating the processor during periods of time when it is not needed. Also, the procedure is employed to switch from a first clock signal to a second clock signal which is asynchronous with respect to the first. In the specific example of **Fig. 12****,** power down and power up are provided merely to save power and the clock signal applied to the processor has the same clock rate subsequent to power up as before power down. In situations wherein the clock signal applied to the processor is to be switched between asynchronous clock signals, then the clock signal prior to power down will be asynchronous with respect to the clock signal subsequent to power up.

Details regarding the specific signals illustrated in Fig. 11 for use in switching the clock rate to the processor (referred to as the ARM) are now provided. Switching the clock rate to the processor is performed by writing to bits [2:0] of uP_CLK_CTL2 register. A write to this register stops the MCLK input to the ARM in the low phase of MCLK (phase 1). The clock rate is switched and then MCLK to the ARM is enabled. Thus, a clutch-and-shift mechanism is provided. Following the write to uP-CLK_CTL2 register, the clock to ARM is disabled, the rate is switched and then the clocks are enabled.

### Signals Description

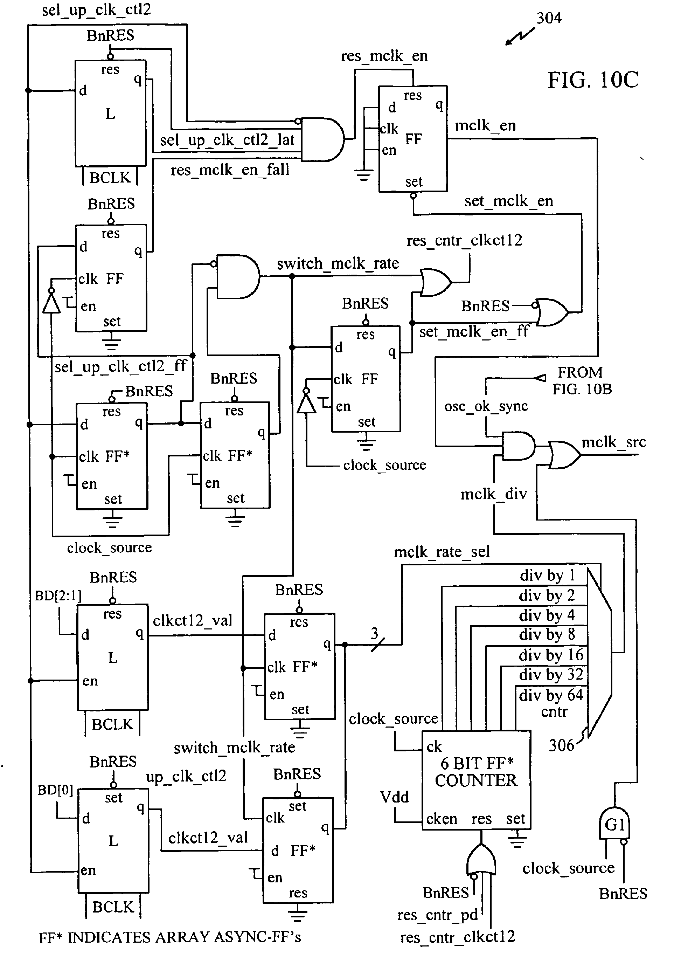

- **sel_up_clk-ctl2**: This is a phi2 half-latched decode of the write to the uP_CLK_CTL2 register.
- **sel_up_clk_ctl2_ff**: sel-up_clk-ctl2 is sampled on the rising edge of clock_source to generate sel_up_clk_ctl2_ff. It is used to switch the clock rate select multiplexer (306 at **Fig. 10C**).
- **res_mclk_en_fall**: sel_up_clk_ctl2_ff is sampled on the falling edge of clock_source to generate res_mclk_en_fall. This is used to deassert res_mclk_en_ after sel_up_clk_ctl2_ff has switched the clock rate select mux.
- **sel_up_clk_ctl2_lat**: This is a delayed version of sel_up_clk_ctl2 and is used to assert res_mclk_en_, which disables MCLK to the ARM. sel_up_clk_ctl2 is not employed to do this because the write to uP_CLK_CTL2 to should be complete (clkctl2_cal gets the write value) before MCLK is shut off.
- **switch_mclk_rate**: The assertion of this signal is the falling edge detection of sel_up_clk_ctl2_ff and its duration is one clock_source cycle. This signal is used to change the clock rate mux to the new uP_CLK_CTL2 value.
- **set_mclk_en**: switch_mclk_rate is sampled on the falling edge of clock_source to generate this signal. It is used to enable MCLK to the ARM.
- **res_mclk_en**: This is asserted after the falling edge of sel_up_clk_ctl2 and is used to disable MCLK to the ARM.
- **res_cntr_clkctl2**: switch_mclk_rate and set_mclk_en are OR'd to generate res_cntr_clkctl2. This is used to reset the divide-by-n counter during clock rate switching. Alternatively, switch_mclk_rate could have been used to reset the counter, but to be safe, the set_mclk_en term is used to provide for a longer reset pulse to the divide-by-n circuit. This ensures that there are no clocks while the rates are being switched, and the clocks are enabled only after the rate has been reliably switched.

### Coming Out of Reset:

- Following resin_n assertion, BnRES goes low. The signal schmitt_out is selected as the clock source for the circuit. The 6-bit async-ff counter is held in reset and an AND gate (G1) outputs schmitt_out on mclk_src. At this point, the schmitt trigger output may not be stable but this has no effect on the microprocessor as BnRES is asserted. When resin_n deasserts, BnRES goes high after two or three cycles on BCLK_phi2. Now, the rising edge of BCLK_phi2 is a result of the falling edge of schmitt_out. Hence, schmitt_out is guaranteed to be low when BnRES deasserts, thus ensuring a glitch-free transition on G1. The 6-bit async-ff counter starts to generate the divided clocks and the 6:1 mux selects the divide-by-2 clock on mclk-src. This is also known in **Fig. 13**.

### Operation:

- After reset has been issued, mclk_src is divide-by-2 of the oscillator and mclk_en is high. Following a write to uP_CLK_CTL2 register, sel_up_clk_ctl2 is a phi2 signal. sel_up_clk_ctl2_ff is asserted on the next rising edge of clock_source. This causes res_mclk_en_fall to go HIGH on the following falling edge of clock_source.
- The completion of the write is a phi2 signal and sel_up_clk_ctl2 is deasserted.

This results in the following:
- sel_up_clk_ctl2_lat is asserted.
- clkctl2_val gets the value written to uP_CLK_CTL2 and this is the new clock rate to be switched to.
- res_mclk_en is asserted and this causes mclk_en to go LOW. mclk_src is now held LOW as a result of this, and thus MCLK to the ARM is shut off. Since this happens during phi2, mclk_src is guaranteed to be LOW when it is shut off by mclk_en.
- On the next rising edge of clock_source, setl_up_clk_clk2_ff is deasserted.
   switch_mclk_rate goes HIGH and mclk_rate_sel gets the value written to up_CLK_CTL2. The clock rate mux now switches and since, at this time, mclk_en is held LOW, mclk_src does not see the glitches caused by the mux switching. The divide-by-n (6-bit async-ff counter) circuit is also reset at this time using res_cntr_clkctl2.
- On the following falling edge of clock_source, res_mclk_en_fall is deasserted. This causes res_mlck_en to go LOW. set_mclk_en goes HIGH at this time, and hence mclk_en goes HIGH. The divide-by-n circuit is still held in reset as switch_mclk_rate continues to be asserted.
- On the next rising edge of clock_source, switch_clk_rate is deasserted.
- On the following falling edge of clock_source, set_mclk_en is deasseretd and this causes res_cntr_clkctl2 to deassert and the divide-by-n circuit starts to count. clk_ctl2_val is stable by now and the new clock rate is available on mclk_src.
- The 2-phase generator for BCLK generated two phases of mclk_src, and during phi2, sel_up_clk_ctl2_lat is deasserted, thus completing the clock switch mechanism.

The circuit of **Figs. 10A-C** also allows four different sources for clock_source. These are selected by writing to bits [5:4] of uP_CLK_CTL1 register, followed by a power-down operation. Upon recovery from power down, the new clock source is used as clock_source with the rate specified by the bits of uP_CLK_CTL2 register.

The power down operation is controlled by bit 0 of uP_CLK_CTL1 register. Entry into power down mode results from two successive writes (1 followed by a 0) to this bit. The recovery from power down results from an unmasked interrupt on nIRQ or nFIQ. The warm-up timer starts to count down following the interrupt and the counter duration is specified by bits [3:1] of uP_CLK_CTL1.
- **pd_en:** This is a decode of the write to bit 0 of uP_CLK_CTL1 and is used to enter and recover from power down.
- **up_osc_en:** During power down, up_osc_en is LOW and is used to disable the oscillator. Upon an interrupt assertion, up_osc_en makes a 0-to-1 transition and this is used to enable the oscillator and the warm-up timer.
- **osc_ok:** This is used to indicate when the oscillator is warmed-up and ready for use by the ARM. It is a slpct1_clk regime signal.
- **osc_ok_delay:** This is a single-cycle delayed version of osc_ok.
- **osc_ok_sync:** osc_ok_delay is synchronized to clock_source regime and this is osc_ok_sync.
- **outof_pd_en:** This is used to control the wake-up operation of the circuit, following an interrupt assertion.
- **wutimer_done:** This indicates the expiry of the warm-up timer.
- **res_cntr_pd:** This is used to reset the divide-by-n counter circuit after the warm-up timer expires, to allow for a glitch-free mclk_src to the ARM.

Details of the specific signals illustrated in Fig. 12 for use in performing a power down operation followed by a power up operation are set forth in the following:
- Following a BnRES assertion and deassertion, pd_en is LOW. up_osc_en is HIGH and the oscillator is enabled.
- A write to uP_CLK_CTL1 results in the following:
- pd_en goes HIGH and this causes up_osc_en to go LOW. The oscillator is shut off, provided voc_osc_en is also LOW.
- osc_ok_sync goes LOW and gates off mclk_src. This shut-off of mclk_src occurs when mclk_src is in the low phase and so is glitch free.
- osc-ok goes LOW on slpctl_clk_phil due to up_osc_en being LOW. On the following slpctl_clk_phil, osc_ok_delay goes LOW. Since osc_ok, osc_ok_delay and osc_ok_sync are essentially the same, all the async-ff's in the clock-source synchronizer chain are reset by pd_en. Thus, osc_ok_sync has the same behavior as osc_ok and osc_ok_delay, though it will go LOW before osc_ok and osc_ok_delay make a 1-to-0 transition (as osc_ok and osc_ok delay are slpctl_clk regine signals).
- The oscillator remains in power down till an unmasked interrupt comes along. The interrupt assertion causes pd_en to go LOW. We have to ensure that if an interrupt asserts before osc_ok_delay has gone LOW, it should not change pd_en until after osc_ok_delay has made a 1-to-0 transition. This is needed because if pd_en goes LOW before osc_ok_delay has gone LOW, unknown values on osc_ok_sync could arise as the reset terms on the clock_source synchronizer chain is pd_en. To implement this, outof_pd_en is used. Prior to interrupt assertion, outof_pd_en is LOW, as the reset term on the async-ff is asserted. When an interrupt asserts, there are two possible cases.
- osc_ok-delay is LOW: In this case, the set term of async-ff is asserted as osc_ok_delay is LOW. But outof_pd_en will be LOW as the reset term is also asserted and reset dominates over set for async-ff. Now, the interrupt assertion causes the reset term on the async-ff to deassert. outof_pd en will then go HIGH as the set term now takes control of the async-ff. Consequently, pd_en goes LOW.
- osc_ok_delay is HIGH: In this case, the set term of the aync-ff is not asserted. outof_pd_en is LOW and when an interrupt asserts, the reset term is also deasserted. outof_pd_en continues to be LOW until osc_ok_delay makes a 1-to-0 transition which sets the async-ff causing outof_pd_en to go HIGH. Consequently, pd_en goes LOW.
- up_osc_en goes HIGH due to pd_en being LOW. This is then synchronized to the slpctl_clk regime and rising-edge detected to generate the load signal for the warm-up timer. The warm-up timer starts counting down and its duration is the value written to bits [3:1] of uP_CLk_CTL2.
- The end of the warm-up duration is detected when the counter value reaches 0x1. At this point, wutimer_done is asserted. This causes osc_ok and osc_ok_delay to assert. osc_ok_delay is then synchronized to clock_source and the synchronized version is rising edge detected to generate res_entr_pd, on the falling edge of clock_source. This causes the divide-by-n counter to be reset just before mclk_src is to be enabled, thus eliminating any glitches on mclk_src during the enabling process.
- On the next rising edge of clock_source, osc_ok_sync goes HIGH and mclk_src is now enabled. res_entr_pd is still asserted.
- On the next falling edge of clock_source, res_cntr_pd is deasserted and the appropriate divide-by-n clock is enabled on mclk_src.
- The interrupt is cleared by the interrupt service routine after power-up. This will deassert outof-pd_en and completes the power down and warm-up sequence.

What have been described are various methods and apparatus for applying clock signals to an RISC processor of the type wherein operations may be suspended merely by disconnecting and subsequently reconnecting clock signals to the processor. Principles of the invention are applicable to other systems as well. The exemplary embodiments described herein are therefore merely illustrative of the invention and should not be construed as limiting the scope of the invention which is to be interpreted in accordance with the claims that follow.

## Claims

1. A method for deactivating a pipelined processor (202) by disconnecting a clock signal (206, 232) from the processor (202) using peripheral circuitry (204 to 216, 230 to 240), said method comprising:
initiating a power down operation by controlling (206) the processor (202) to execute an instruction placing a predetermined device (240) external to the processor (202) in a predetermined state, said instruction being applied to the external device (240) only as part of the power down operation; and
detecting (238) the eternal device (240) being placed in the predetermined state using the peripheral circuitry (204 to 216, 230 to 240), **characterised by**:
in response to said detecting (238), applying a wait signal to the processor to stretch the current pipeline stage of the processor and then disconnecting (234, 237) the clock signal (206, 232) from the processor (202) using the peripheral circuitry (204 to 216, 230 to 240) subsequent to completion of operations performed by the processor (202) during the current pipeline stage of the processor (202) and prior to initiation of operations of a subsequent pipeline stage of the processor (202), wherein the peripheral circuity (204 to 216, 230 to 240) waits until the clock signal (206, 232) has transitioned to a low state before disconnecting the clock signal (206, 232) from the processor (202).

2. The method of claim 1, wherein the processor (202) is also configured to suspend operation in response the assertion of the wait signal and wherein the peripheral circuitry (204, 206, 238) asserts the wait signal
during the current pipeline stage at least until the clock signal (206, 232) reaches a low state.

3. The method of claim 1, wherein the predetermined instruction is a load operation and the external device (240) is a predetermined storage register (240).

4. The method of claim 3, wherein the storage register (240) stores a signal bit and wherein the load operation operates to store a logic one in the bit and then to store a logic zero in the bit.

5. The method of claim 1, further including subsequently reactivating the processor (202) by reconnecting (234, 237) the clock signal (206, 232) to the processor (202) following completion of a sleep period.

6. The method of claim 5, wherein reconnecting (234, 237) the clock signal (206, 232) to the processor (202) following completion of the sleep period includes reactivating the clock signal in advance of a clock signal reconnect time to permit a device (206, 232) generating the clock signal to warm up prior to reconnection of the clock signal so that the clock signal is stable upon reconnection (234, 237) to the processor (202).

7. The method of claim 6, wherein reconnecting (234, 237) the clock signal is performed when the clock signal is in an inactive state.

8. A method for switching between asynchronous clock signals applied to a pipelined processor (202) using peripheral circuitry (204 to 216, 230 to 240) also receiving the clock signals, said method comprising:
controlling (234) the peripheral circuitry (204 to 216, 230 to 240) to connect a first clock signal (232) to the processor (202) **characterised by**:
deactivating the pipelined processor (202) according to the method of claim 1; and
controlling (238) the peripheral circuitry (204 to 216, 230 to 240) to wait until a second clock signal (232) is in an inactive phase and then applying (204, 206, 234 to 237) the second clock signal (232) to the processor (202).

9. The method of claim 8, wherein controlling the peripheral circuitry (204 to 216, 230 to 240) to wait until the second clock signal (232) is in an inactive phase, then to apply the second clock signal (232) to the processor (202) includes:
detecting (238) an interrupt signal;
activating a warm-up timer;
applying (204, 206, 234 to 237) the second clock signal (232) to the processor (202) upon completion of the warm up period and during an inactive phase of the second clock signal (232).

10. A system for deactivating a pipelined processor (202) by disconnecting a clock signal from the processor (202), using peripheral circuitry (204 to 216, 230, 240) said system comprising:
first means (206, 232) for providing a clock signal;
second means (240), external to the processor (202), for storing a representation of a state;
third means for executing an instruction using the processor (202) to place said second means (240) into a predetermined state, said instruction being applied to the second means (240) only as part of a power down operation; and
fourth means (238), external to the processor (202), for detecting the second means (240) being placed in the
predetermined state, **characterised in that**:
the fourth means (238) is operable in response to detecting the second means (240) being placed in the predetermined state to apply a wait signal to the processor to stretch the current pipeline stage of the processor and then to use the peripheral circuitry (204 to 216, 230 to 240) to disconnect the clock signal from the processor (202), subsequent to completion of operations performed by the processor (202) during the current pipeline stage of the processor (202) and prior to initiation of operations of a subsequent pipeline stage of the processor (202) wherein the peripheral circuitry waits until the clock signal (206, 232) has transitioned to a low state before disconnecting the clock signal (206, 232) from the processor (202),

11. A system for switching between asynchronous clock signals (232) applied to a pipelined processor (202) using peripheral circuitry (204 to 216, 230 to 240) also receiving the clock signals (232), said system **characterised by**:
the system for deactivating a pipelined processor (202) according to claim 10, wherein the clock signal (232) is a first clock signal (232); and
the fourth means (238) controls the peripheral circuitry (204 to 216, 230 to 240) to wait until a second clock signal (232) is in an inactive phase then to apply the second clock signal (232) to the processor (202).

## Patentansprüche

1. Ein Verfahren zum Desaktivieren eines gepipelinten Prozessors (202) durch das Abklemmen eines Taktsignals (206, 232) von dem Prozessor (202) unter Verwendung eines periphären Schaltkreises (204 bis 216, 230 bis 240), wobei das Verfahren folgendes aufweist:
Initiieren eines Abschaltvorgangs durch Steuern (206) des Prozessors (202) zum Ausführen einer Anweisung, die ein vorbestimmtes Gerät (240), das außerhalb des Prozessors (202) ist,
in einen vorbestimmten Zustand setzt, wobei die Anweisung an das externe Gerät (240) nur als Teil des Abschaltvorgangs angebracht wird; und
Detektieren (238) des externen Geräts (240), das in den vorbestimmten Zustand gesetzt wurde, unter Verwendung des periphären Schaltkreises (204 bis 216, 230 bis 240), **dadurch gekennzeichnet, dass**:
als Antwort auf das Detektieren (238) ein Wartesignal an den Prozessor angebracht wird, um die aktuelle Pipelinestufe des Prozessors auszudehnen und dann das Taktsignal (206, 232) unter Verwendung des periphären Schaltkreises (204 bis 216, 230 bis 240) von dem Prozessor (202) abzuklemmen (234, 237), nach Beendigung der Operationen, die von dem Prozessor (202) während der aktuellen Pipelinestufe des Prozessors (202) ausgeführt wurden und vor der Initiierung von Operationen einer nachfolgenden Pipelinestufe des Prozessors (202), wobei der periphäre Schaltkreis (204 bis 216, 230 bis 240) wartet bis das Taktsignal (206, 232) in einen Low-Zustand, beziehungsweise einen Niedrigpegelzustand übergegangen ist bevor das Taktsignal (206, 232) von dem Prozessor (202) abgeklemmt wird.

2. Verfahren nach Anspruch 1, wobei der Prozessor (202) ferner zum Unterdrücken des Betriebs als Antwort auf das Setzen des Wartesignals konfiguriert ist und wobei der periphäre Schaltkreis (204, 206, 238) das Wartesignal während der aktuellen Pipelinestufe wenigstens so lange setzt, bis das Taktsignal (206, 232) einen Low-Zustand erreicht.

3. Verfahren nach Anspruch 1, wobei die vorbestimmte Anweisung eine Ladeoperation und das externe Gerät (240) ein vorbestimmtes Speicherregister (240) ist.

4. Verfahren nach Anspruch 3, wobei das Speicherregister (240) ein Signalbit speichert und wobei die Ladeoperation das Speichern einer logischen Eins in dem Bit und dann das Speichern einer logischen Null in dem Bit bewirkt.

5. Verfahren nach Anspruch 1, das ferner das nachfolgende Reaktivieren des Prozessors (202) durch Wiederverbinden (234, 237) des Taktsignals (206, 232) mit dem Prozessor (202) folgend auf die Beendigung einer Schlafperiode beinhaltet.

6. Verfahren nach Anspruch 5, wobei das Wiederverbinden (234, 237) des Taktsignals (206, 232) mit dem Prozessor (202) folgend auf die Beendigung der Schlafperiode, das Reaktivieren des Taktsignals (206, 232) vor einer Taktsignal-Wiederverbindungszeit beinhaltet, um einem Gerät (206, 232) das das Taktsignal erzeugt ein Aufwärmen vor dem Wiederverbinden des Taktsignals zu erlauben, damit das Taktsignal beim Wiederverbinden (234, 237) mit dem Prozessor (202) stabil ist.

7. Verfahren nach Anspruch 6, wobei das Wiederverbinden (234, 237) des Taktsignals ausgeführt wird, wenn das Taktsignal in einem inaktiven Zustand ist.

8. Ein Verfahren zum Schalten zwischen asynchronen Taktsignalen, die an einen gepipelinten Prozessor (202) angebracht werden, unter Verwendung eines periphären Schaltkreises (204 bis 216, 230 bis 240), das ferner Taktsignale empfängt, wobei das Verfahren folgendes aufweist:
Steuern (234) des periphären Schaltkreises (204 bis 216, 230 bis 240), um ein erstes Taktsignal (232) mit einem Prozessor (202) zu verbinden, **gekennzeichnet durch**:
Deaktivieren des gepipelinten Prozessors (202) entsprechend dem Verfahren nach Anspruch 1; und
Steuern (238) des periphären Schaltkreises (204 bis 216, 230 bis 240) um zu Warten, bis ein zweites Taktsignal (232) in einer inaktiven Phase ist zum anschließenden Anbringen (204, 206, 234 bis 237) des zweiten Taktsignals (232) an den Prozessor (202).

9. Verfahren nach Anspruch 8, wobei das Steuern des periphären Schaltkreises (204 bis 216, 230 bis 240) zum Warten bis das zweite Taktsignal (232) in einer inaktiven Phase ist und dann das Anwenden (204, 206, 234 bis 237) des zweiten Taktsignals (232) auf den Prozessor (202) Folgendes beinhaltet:
Detektieren (238) eines Interrupt-Signals;
Aktivieren eines Aufwärm-Timers;
Anbringen (204, 206, 234 bis 237) des zweiten Taktsignals (232) an den Prozessor (202) beim Beendigen der Aufwärmphase und
während einer inaktiven Phase des zweiten Taktsignals (232).

10. Ein System zum Deaktivieren eines gepipelinten Prozessors (202) durch das Abklemmen eines Taktsignals (206, 232) von dem Prozessor (202) unter Verwendung eines periphären Schaltkreises (204 bis 216, 230 bis 240), wobei das System Folgendes aufweist:
erste Mittel (206, 232) zum Bereitstellen eines Taktsignals;
zweite Mittel (240), außerhalb des Prozessors (202), zum Speichern einer Darstellung eines Zustands;
dritte Mittel zum Ausführen einer Anweisung unter Verwendung des Prozessors (202), um die zweiten Mittel (240) in einen vorbestimmten Zustand zu setzen, wobei die Anweisung an die zweiten Mittel (240) nur als Teil des Abschaltvorgangs angebracht wird; und
vierte Mittel (238), außerhalb des Prozessors (202), zum Detektieren der zweiten Mittel (240), die in den vorbestimmten Zustand gesetzt wurden, **dadurch gekennzeichnet, dass**:
das vierte Mittel (238) betriebsfähig ist als Antwort auf das Detektieren des zweiten Mittels (240), das in den vorbestimmten Zustand gesetzt ist, um ein Wartesignal an den Prozessor anzubringen um die aktuelle Pipelinestufe des Prozessors auszudehnen und dann das Taktsignal (206, 232) unter Verwendung des periphären Schaltkreises (204 bis 216, 230 bis 240) von dem Prozessor (202) abzuklemmen, nach Beendigung der Operationen, die von dem Prozessor (202) während der aktuellen Pipelinestufe des Prozessors (202) ausgeführt wurden und vor der Initiierung von Operationen einer nachfolgenden Pipelinestufe des Prozessors (202), wobei der periphäre Schaltkreis wartet bis das Taktsignal (206, 232) in einen Low-Zustand übergegangen ist bevor das Taktsignal (206, 232) von dem Prozessor (202) abgeklemmt wird.

11. Ein System zum Schalten zwischen asynchronen Taktsignalen (232), die an einen gepipelinten Prozessor (202) angebracht werden, unter Verwendung eines periphären Schaltkreises (204 bis 216, 230 bis 240), das ferner Taktsignale empfängt, wobei das System folgendes aufweist:
das System zum Deaktivieren eines gepipelinten Prozessors (202) gemäß Anspruch 10, wobei das Taktsignal (232) ein erstes Taktsignal (232) ist; und
das vierte Mittel (238) den periphären Schaltkreis (204 bis 216, 230 bis 240) steuert um zu Warten, bis ein zweites Taktsignal (232) in einer inaktiven Phase ist zum anschließenden Anbringen des zweiten Taktsignals (232) an den Prozessor (202).

## Revendications

1. Procédé de désactivation d'un processeur pipeline (202) par déconnexion d'un signal d'horloge (206, 232) du processeur (202) à l'aide d'une circuiterie périphérique (204 à 216, 230 à 240), ledit procédé comprenant:
le déclenchement d'une opération de mise hors tension par commande (206) du processeur (202) pour exécuter une instruction plaçant un dispositif prédéterminé (240) externe au processeur (202) dans un état prédéterminé, ladite instruction étant appliquée au dispositif externe (240) seulement en tant que partie de l'opération de mise hors tension; et
la détection (238) du fait que le dispositif externe (240) est placé dans l'état prédéterminé à l'aide de la circuiterie périphérique (204 à 216, 230 à 240), **caractérisé par**:
en réponse à ladite détection (238), l'application d'un signal d'attente au processeur afin d'étendre l'étage de pipeline courant du processeur et ensuite la déconnexion (234, 237) du signal d'horloge (206, 232) du processeur (202) à l'aide de la circuiterie périphérique (204 à 216, 230 à 240) après l'achèvement d'opérations effectuées par le processeur (202) durant l'étage de pipeline courant du processeur (202) et avant le déclenchement d'opérations d'un étage de pipeline subséquent du processeur (202), la circuiterie périphérique (204 à 216, 230 à 240) attendant que le signal d'horloge (206, 232) soit passé à un état bas avant de déconnecter le signal d'horloge (206, 232) du processeur (202).

2. Procédé selon la revendication 1, dans lequel le processeur (202) est également configuré pour suspendre une opération en réponse à l'imposition du signal d'attente et dans lequel la circuiterie périphérique (204, 206, 238) impose le signal d'attente durant l'étage de pipeline courant au moins jusqu'à ce que le signal d'horloge (206, 232) atteigne un état bas.

3. Procédé selon la revendication 1, dans lequel l'instruction prédéterminée est une opération de chargement et le dispositif externe (240) est un registre de stockage prédéterminé (240).

4. Procédé selon la revendication 3, dans lequel le registre de stockage (240) stocke un bit de signal et dans lequel l'opération de chargement a pour effet de stocker un un logique dans le bit et ensuite de stocker un zéro logique dans le bit.

5. Procédé selon la revendication 1, comprenant en outre la réactivation subséquente du processeur (202) par reconnexion (234, 237) du signal d'horloge (206, 232) au processeur (202) après achèvement d'une période de sommeil.

6. Procédé selon la revendication 5, dans lequel la reconnexion (234, 237) du signal d'horloge (206, 232) au processeur (202) après achèvement de la période de sommeil comprend la réactivation du signal d'horloge préalablement à un instant de reconnexion de signal d'horloge afin de permettre à un dispositif (206, 232) générant le signal d'horloge de s'échauffer avant la reconnexion du signal d'horloge pour que le signal d'horloge soit stable lors de la reconnexion (234, 237) au processeur (202).

7. Procédé selon la revendication 6, dans lequel la reconnexion (234, 237) du signal d'horloge est effectuée lorsque le signal d'horloge est dans un état inactif.

8. Procédé de commutation entre des signaux d'horloge asynchrones appliqués à un processeur pipeline (202) à l'aide d'une circuiterie périphérique (204 à 216, 230 à 240) recevant également les signaux d'horloge, ledit procédé comprenant:
la commande (234) de la circuiterie périphérique (204 à 216, 230 à 240) pour connecter un premier signal d'horloge (232) au processeur (202), **caractérisé par**:
la désactivation du processeur pipeline (202) selon le procédé de la revendication 1; et
la commande (238) de la circuiterie périphérique (204 à 216, 230 à 240) pour attendre qu'un deuxième signal d'horloge (232) soit dans une phase inactive et pour alors appliquer (204, 206, 234 à 237) le deuxième signal d'horloge (232) au processeur (202).

9. Procédé selon la revendication 8, dans lequel la commande de la circuiterie périphérique (204 à 216, 230 à 240) pour attendre que le deuxième signal d'horloge (232) soit dans une phase inactive et pour alors appliquer le deuxième signal d'horloge (232) au processeur (202) comprend:
la détection (238) d'un signal d'interruption;
l'activation d'un temporisateur d'échauffement;
l'application (204, 206, 234 à 237) du deuxième signal d'horloge (232) au processeur (202) suite à l'achèvement de la période d'échauffement et durant une phase inactive du deuxième signal d'horloge (232).

10. Système de désactivation d'un processeur pipeline (202) par déconnexion d'un signal d'horloge du processeur (202), à l'aide d'une circuiterie périphérique (204 à 216, 230 à 240), ledit système comprenant:
un premier moyen (206, 232) pour fournir un signal d'horloge;
un deuxième moyen (240), externe au processeur (202), pour stocker une représentation d'un état;
un troisième moyen pour exécuter une instruction à l'aide du processeur (202) afin de placer ledit deuxième moyen (240) dans un état prédéterminé, ladite instruction étant appliquée au deuxième moyen (240) seulement en tant que partie d'une opération de mise hors tension; et
un quatrième moyen (238), externe au processeur (202), pour détecter que le deuxième moyen (240) est placé dans l'état prédéterminé, **caractérisé en ce que**:
le quatrième moyen (238) est utilisable, en réponse à la détection du fait que le deuxième moyen (240) est placé dans l'état prédéterminé, pour appliquer un signal d'attente au processeur afin d'étendre l'étage de pipeline courant du processeur et ensuite utiliser la circuiterie périphérique (204 à 216, 230 à 240) pour déconnecter le signal d'horloge du processeur (202), après l'achèvement d'opérations effectuées par le processeur (202) durant l'étage de pipeline courant du processeur (202) et avant le déclenchement d'opérations d'un étage de pipeline subséquent du processeur (202), la circuiterie périphérique attendant que le signal d'horloge (206, 232) soit passé un état bas avant de déconnecter le signal d'horloge (206, 232) du processeur (202).

11. Système de commutation entre des signaux d'horloge asynchrones (232) appliqués à un processeur pipeline (202) à l'aide d'une circuiterie périphérique (204 à 216, 230 à 240) recevant également les signaux d'horloge (232), ledit système étant **caractérisé par**:
le système de désactivation d'un processeur pipeline (202) selon la revendication 10, dans lequel le signal d'horloge (232) est un premier signal d'horloge (232); et
le quatrième moyen (238) commande la circuiterie périphérique (204 à 216, 230 à 240) pour attendre qu'un deuxième signal d'horloge (232) soit dans une phase inactive et pour alors appliquer le deuxième signal d'horloge (232) au processeur (202).
